(19) Europäisches Patentamt / European Patent Office / Office européen des brevets

(11) **EP 3 311 138 B1**

(12) **FASCICULE DE BREVET EUROPEEN**

(45) Date de publication et mention de la délivrance du brevet:
**07.07.2021 Bulletin 2021/27**

(21) Numéro de dépôt: **16735922.3**

(22) Date de dépôt: **20.06.2016**

(51) Int Cl.:
**G01N 21/27** *(2006.01)*     **G01N 21/47** *(2006.01)*

(86) Numéro de dépôt international:
**PCT/FR2016/051501**

(87) Numéro de publication internationale:
**WO 2016/203183 (22.12.2016 Gazette 2016/51)**

(54) **DETERMINATION DE COEFFICIENT D'ABSORPTION ET DE DIFFUSION A L'AIDE D'UN SIGNAL OPTIQUE DE RELFEXION CALIBRE**

BESTIMMUNG DES ABSORPTIONS- UND STREUKOEFFIZIENTEN MITTELS EINES KALIBRIERTEN OPTISCHEN REFLEXIONSSIGNALS

DETERMINATION OF THE ABSOPRTION AND SCATTERING COEFFICIENT ON THE BASIS OF A CALIBRATED OPTICAL REFLECTION SIGNAL

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **19.06.2015 FR 1555657**

(43) Date de publication de la demande:
**25.04.2018 Bulletin 2018/17**

(73) Titulaire: **Commissariat à l'énergie atomique et aux énergies alternatives 75015 Paris (FR)**

(72) Inventeurs:
• **SORGATO, Véronica** 38000 Grenoble (FR)
• **PLANAT-CHRETIEN, Anne** 38120 St Egreve (FR)
• **BERGER, Michel** 38640 Cossey Claix (FR)

(74) Mandataire: **INNOV-GROUP 310, avenue Berthelot 69372 Lyon Cedex 08 (FR)**

(56) Documents cités:
**US-A1- 2008 297 791**

• QIN J ET AL: "HYPERSPECTRAL DIFFUSE REFLECTANCE IMAGING FOR RAPID, NONCONTACT MEASUREMENT OF THE OPTICAL PROPERTIES OF TURBID MATERIALS", APPLIED OPTICS, OPTICAL SOCIETY OF AMERICA, WASHINGTON, DC; US, vol. 45, no. 32, 10 novembre 2006 (2006-11-10), pages 8366-8373, XP001501884, ISSN: 0003-6935, DOI: 10.1364/AO.45.008366
• XIEWEI ZHONG ET AL: "Lookup-table-based inverse model for human skin reflectance spectroscopy: two-layered Monte Carlo simulations and experiments", OPTICS EXPRESS, vol. 22, no. 2, 21 janvier 2014 (2014-01-21), page 1852, XP055265414, DOI: 10.1364/OE.22.001852
• NARASIMHAN RAJARAM ET AL: "Lookup table-based inverse model for determining optical properties of turbid media", JOURNAL OF BIOMEDICAL OPTICS, vol. 13, no. 5, 1 janvier 2008 (2008-01-01), page 050501, XP055029285, ISSN: 1083-3668, DOI: 10.1117/1.2981797
• Quan Liu ET AL: "Angled probe design for scattering measurements from a small tissue volume", , 19 mars 2006 (2006-03-19), XP055265420, Extrait de l'Internet: URL:https://www.osapublishing.org/DirectPD FAccess/CD584589-F2BA-0566-E30F5D6416CD FF7 9_169608/BIO-2006-ME57.pdf?da=1&id=169608 &uri=BIO-2006-ME57&seq=0&mobile=no [extrait le 2016-04-14]

**Description**

**Domaine technique**

L'invention se situe dans le domaine de la caractérisation des échantillons, et notamment des échantillons biologiques, et plus particulièrement la peau.

**Description de l'art antérieur**

Les mesures optiques, permettant de caractériser les propriétés optiques d'échantillons, sont répandues. On peut notamment citer les mesures basées sur la détection d'un signal rétrodiffusé par un échantillon illuminé par un faisceau lumineux. Il s'agit en particulier de la spectrométrie Raman, de l'imagerie de fluorescence ou de la spectrométrie de réflectance diffuse.

La spectrométrie de réflectance diffuse, souvent désignée par l'acronyme anglais DRS (Diffuse Reflectance Spectroscopy), consiste à exploiter la lumière rétrodiffusée par un objet diffusant soumis à un éclairement, généralement ponctuel. Cette technique s'avère performante pour caractériser des propriétés optiques superficielles d'échantillons, en particulier les propriétés de diffusion ou d'absorption.

Mise en œuvre sur la peau, cette technique permet par exemple de caractériser le derme ou l'épiderme, comme décrit dans le document EP 2762064. Ce document décrit une sonde de mesure destinée à être appliquée contre la peau. Cette sonde comporte une fibre optique centrale, dite fibre d'émission, reliée à une source de lumière, et destinée à diriger un faisceau lumineux vers un échantillon de peau. Des fibres optiques, disposées autour de la fibre centrale, dites fibres de détection, recueillent un signal optique rétrodiffusé par le derme, ce signal optique étant ensuite détecté par un photodétecteur. Des moyens d'analyse spectrale du signal optique, couplés à des algorithmes de calcul, permettent d'estimer des paramètres du derme, en particulier la concentration de certains chromophores, par exemple l'oxyhémoglobine ou la déoxyhémoglobine et/ou des propriétés optiques gouvernant le parcours des photons dans le derme, notamment le coefficient de diffusion réduit $\mu_s'$ ainsi que le coefficient d'absorption $\mu_a$.

Ainsi, la sonde comporte une ligne d'illumination, destinée à illuminer l'échantillon, comportant la source de lumière et la fibre optique d'émission. La sonde comporte également une ligne de détection, destinée à détecter une lumière rétrodiffusée par l'échantillon, comportant les fibres optiques de détection et le photodétecteur. Les propriétés de la ligne d'illumination et de la ligne de détection sont prises en compte grâce à une étape de calibration, permettant la détermination d'un facteur de calibration. Ce dernier est obtenu en effectuant une mesure sur un échantillon de calibration, dont les propriétés optiques sont connues. Ce facteur de calibration, désigné par le terme $M^{std}$ dans cette demande, est ensuite appliqué au signal mesuré par le photodétecteur, désigné par le terme $M^{skin}$.

Le document Qin J, "Hyperspectral diffuse reflectance imaging for rapid, non contact measurement of the optical properties of turbid materials" Applied Optics Vol 45 N°32, 10 november 2006, décrit un procédé de détermination de propriétés optiques d'un échantillon par spectrométrie de réflectance diffuse. Ce procédé comporte une détection, par un photodétecteur spectrométrique, d'un rayonnement rétrodiffusé par un échantillon à plusieurs distances de rétrodiffusion. Le signal ainsi détecté est multiplié par un facteur de calibration. L'estimation des propriétés optiques est réalisée par un ajustement à l'aide d'un modèle de diffusion représentant l'évolution du coefficient de diffusion réduit dans l'échantillon de calibration. Ainsi, la détermination des propriétés optiques se base sur une connaissance a priori de l'échantillon et d'un modèle de diffusion de la lumière dans l'échantillon analysé, ce modèle décrivant l'évolution de la valeur du coefficient de diffusion en fonction de la longueur d'onde. La détermination des propriétés optiques n'est quantitative que pour un échantillon analysé dont le coefficient de diffusion réduit le même modèle que les échantillons de calibration. On comprend que la nécessité de se baser sur un modèle constitue une limitation contraignante. Un tel procédé ne convient pas à un échantillon complexe, dont le modèle de diffusion a priori n'est pas connu. Par ailleurs, la prise en compte de ce modèle entraîne que différentes estimations d'une propriété optique, à différentes longueurs d'onde, ne sont pas indépendantes les unes des autres, puisque liées par le modèle.

Les inventeurs ont constaté que les procédés précédemment cités ne sont pas optimaux. Un objectif de la présente invention est d'améliorer les procédés de l'art antérieur, de façon à déterminer les propriétés optiques d'un échantillon avec une précision accrue.

**Exposé de l'invention**

Un objet de l'invention est un procédé de détermination d'une propriété optique d'un échantillon selon la revendication 1.

Le procédé peut comporter au moins une des caractéristiques suivantes, prises isolément ou selon les combinaisons techniquement réalisables :

▪ L'étape iv) comporte l'application d'un facteur de réactualisation, correspondant à la distance de rétrodiffusion, à chaque facteur de calibration, le facteur de réactualisation ayant été préalablement déterminé, en :

- mesurant, à un instant $t$, un signal de rétrodiffusion, représentant un rayonnement rétrodiffusé émanant de la surface d'un échantillon de calibration, à une distance de rétrodiffusion d'une zone élémentaire d'illumination dudit échantillon de calibration, l'échantillon de calibration étant illuminé par ledit faisceau lumineux ;
- comparant ledit signal de rétrodiffusion mesuré à l'instant t à un signal mesuré, dans des mêmes conditions, à un instant $t_0$, antérieur à l'instant t.

▪ Lors de l'étape v) la détermination de ladite propriété optique comporte une comparaison entre :

- une grandeur d'intérêt,
- une pluralité d'estimations de ladite grandeur d'intérêt, chaque estimation étant réalisée en considérant une valeur prédéterminée de ladite propriété optique.

▪ Chaque signal de rétrodiffusion est acquis à une pluralité de longueurs d'onde, de telle sorte que la grandeur d'intérêt et le facteur de calibration peuvent prendre la forme de fonctions spectrales, définies sur ladite pluralité de longueurs d'onde.

▪ Ladite grandeur d'intérêt, associée à une distance de rétrodiffusion, est obtenue par l'application d'un ratio entre l'intensité d'un signal de rétrodiffusion, correspondant à ladite distance de rétrodiffusion, par l'intensité dudit faisceau lumineux, mesurée par le photodétecteur, auquel cas ladite grandeur d'intérêt est une réflectance.

▪ Lors de l'étape v), on considère différentes valeurs de ladite grandeur d'intérêt, chaque valeur correspondant à une distance de rétrodiffusion différente.

▪ L'échantillon examiné est un tissu humain, animal, végétal, ou une denrée alimentaire.

Un autre objet de l'invention est un dispositif de mesure d'un signal optique produit par un échantillon comportant :

- une source de lumière apte à émettre un faisceau lumineux vers une surface dudit échantillon, de façon à former, sur ladite surface, une zone élémentaire d'illumination
- un photodétecteur, apte à acquérir, un signal de rétrodiffusion, représentatif d'un rayonnement rétrodiffusé par l'échantillon à une distance, dite distance de rétrodiffusion, de ladite zone élémentaire d'illumination ;

le dispositif étant caractérisé en ce qu'il comporte également :

- un processeur, apte à mettre en œuvre du procédé décrit ci-dessus.

Ce dispositif peut notamment comporter un système optique, configuré pour assurer un couplage optique entre le photodétecteur et une zone élémentaire de détection située à la surface de l'échantillon, de laquelle émane ledit rayonnement rétrodiffusé.

## Figures

La figure 1 représente un dispositif permettant l'application de l'invention.

La figure 2 est une vue en coupe de ce dispositif, selon un plan perpendiculaire à l'axe Z et passant par l'extrémité distale des fibres de détection.

La figure 3A représente une configuration de mesure dite « à distance », selon laquelle chaque fibre optique de détection est placée à distance de l'échantillon analysé.

La figure 3B représente une configuration de mesure dite « au contact », selon laquelle chaque fibre optique de détection est placée au contact de l'échantillon analysé.

La figure 4A représente les principales étapes d'un procédé selon l'invention.

La figure 4B représente les principales étapes d'une variante du procédé représenté sur la figure 4A.

La figure 5 représente différents facteurs de calibration pour 3 longueurs d'onde ($\lambda$ = 470 nm, $\lambda$ = 607 nm et $\lambda$ =741 nm), et pour trois échantillons de calibration différents, chaque facteur de calibration ayant un coefficient de diffusion réduit $\mu_{s'}$ différent l'un de l'autre.

La figure 6 représente une modélisation de la réflectance, à une distance de rétrodiffusion donnée, pour différentes valeurs du coefficient d'absorption $\mu_a$ et du coefficient de diffusion réduit $\mu_{s'}$.

Les figures 7A, 7B, 7C et 7D représentent les résultats d'essais expérimentaux, montrant l'influence du choix du facteur de calibration sur l'estimation du coefficient de diffusion réduit (figures 7A et 7C) ou du coefficient d'absorption (figure 7B et figure 7D).

Les figures 8A, 8B, 8C et 8D représentent les résultats d'essais expérimentaux comparatifs, montrant l'influence de la mise en œuvre d'un procédé selon l'invention sur l'estimation du coefficient de diffusion réduit (figures 8A et 8C) ou du coefficient d'absorption (figure 8B et figure 8D), selon une configuration de mesure dite au contact, schématisée sur la figure 3B.

Les figures 9A, 9B, 9C et 9D représentent les résultats d'essais expérimentaux comparatifs, montrant l'influence de la mise en œuvre d'un procédé selon l'invention sur l'estimation du coefficient de diffusion réduit (figures 9A et 9C) ou du coefficient d'absorption (figure 9B et figure 9D), selon une configuration de mesure dite à distance, schématisée sur la figure 3A.

## Exposé de modes de réalisation particuliers

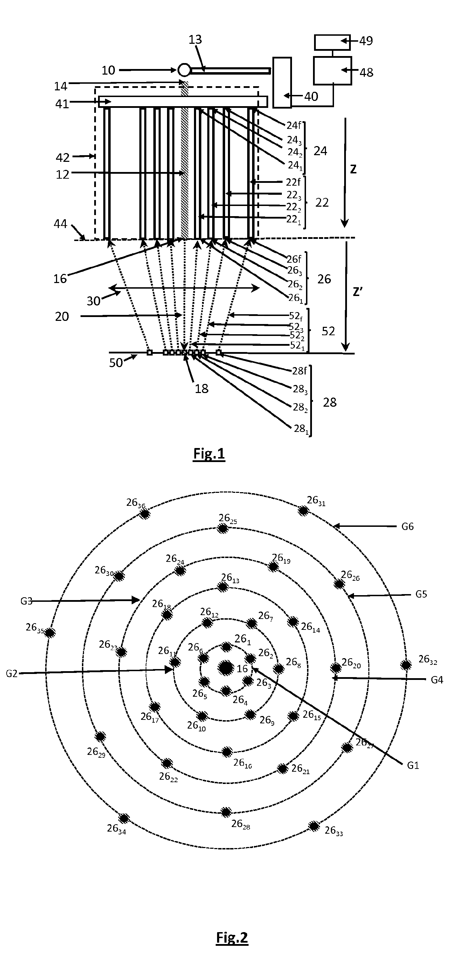

La figure 1 représente un premier mode de réalisation d'un dispositif 1 selon l'invention. Il comporte une source de lumière 10, qui, dans cet exemple, est une source de lumière blanche commercialisée par Ocean Optics sous la référence HL2000.

La source de lumière 10 comprend, dans cet exemple, une fibre optique d'émission 12, s'étendant entre une extrémité proximale 14 et une extrémité distale 16. La fibre optique d'émission 12 est apte à collecter la lumière par une extrémité proximale 14 et à émettre un faisceau lumineux 20 vers l'échantillon par une extrémité distale 16, ledit faisceau lumineux étant alors dirigé vers la surface d'un échantillon 50. Dans une telle configuration, la source de lumière 10 est dite fibrée.

Le diamètre de la fibre optique d'émission 12 est compris entre 100 $\mu$m et 1 mm, et est par exemple égal à 500 $\mu$m.

Le dispositif comporte également une pluralité de fibres optiques de détection $22_1$, $22_2$, $22_{3,...}$ $22_f$...$22_F$, l'indice f étant compris entre 1 et F, F désignant le nombre de fibres optiques de détection dans le dispositif. F est un entier naturel compris généralement compris entre 1 et 100, et préférentiellement compris entre 5 et 50. Chaque fibre de détection $22_1$, $22_2$, $22_3$,.. $22_f$...$22_F$ s'étend entre une extrémité proximale $24_1$, $24_2$, $24_3$,.. $24_f$...$24_F$ et une extrémité distale $26_1$, $26_2$, ...$26_f$ ...$26_F$. Sur la figure 1, les références 22, 24 et 26 désignent respectivement l'ensemble des fibres de détection, l'ensemble des extrémités proximales des fibres de détection et l'ensemble des extrémités distales des fibres de détection. Le diamètre de chaque fibre optique de détection 22 est compris entre 50 $\mu$m et 1 mm, et est par exemple égal à 100 $\mu$m. L'extrémité proximale 24 de chaque fibre optique de détection 22 est apte à être optiquement couplée à un photodétecteur 40. L'extrémité distale $26_1$, $26_2$,...$26_F$ de chaque fibre optique de détection 22 est apte à collecter respectivement un rayonnement $52_1$, $52_2$, ...$52_F$ rétrodiffusé par l'échantillon 50, lorsque ce dernier est exposé au faisceau lumineux 20.

Le photodétecteur 40 est apte à détecter chaque rayonnement rétrodiffusé $52_1$, $52_2$, ...$52_F$ de façon à former un signal, dit signal de rétrodiffusion $(S_1, S_2, ...S_N)$ comme décrit par la suite. Le photodétecteur 40 peut-être un photodétecteur non résolu spectralement, par exemple une photodiode ou un photodétecteur matriciel de type CCD ou CMOS. Dans cet exemple, il s'agit d'un spectrophotomètre, apte à établir le spectre en longueur d'onde du rayonnement collecté par une fibre optique de détection 22 auquel il est couplé. L'homme du métier choisira un photodétecteur spectrométrique lorsqu'il privilégie une bonne résolution spectrale ou un photodétecteur matriciel lorsqu'il privilégie une bonne résolution spatiale.

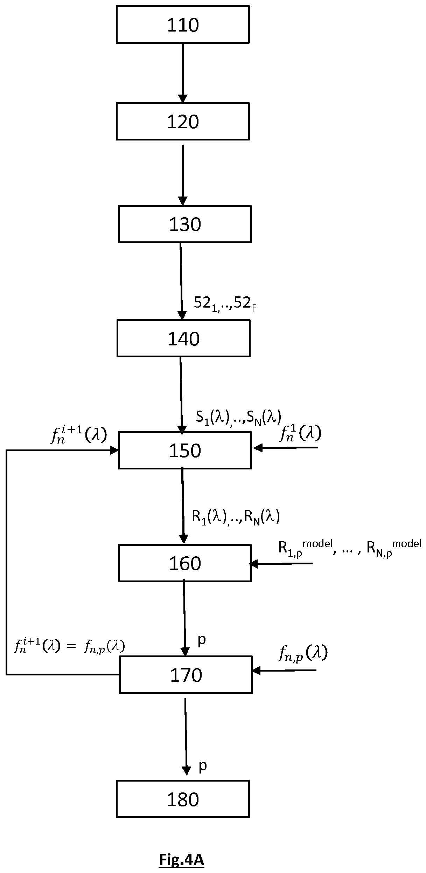

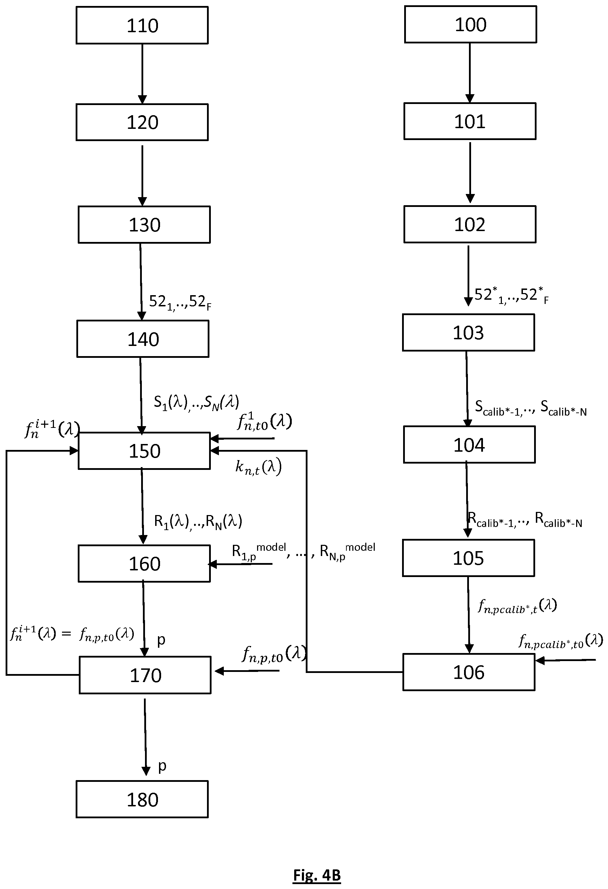

Le photodétecteur 40 est apte à être connecté à un processeur 48, ce dernier étant relié à une mémoire 49 comportant des instructions, ces dernières pouvant être exécutées par le processeur 48, pour mettre en œuvre le procédé représenté sur les figures 4A ou 4B, et décrit ci-après. Ces instructions peuvent être sauvegardées sur un support d'enregistrement, lisible par un processeur, de type disque dur, CDROM ou autre type de mémoire.

Les fibres optiques de détection 22 s'étendent parallèlement les unes aux autres, parallèlement à un axe longitudinal Z autour de la fibre optique d'émission 12. Elles sont maintenues fixes les unes par rapport aux autres par un élément de maintien 42. Leurs extrémités distales 26 sont coplanaires, et définissent, dans cet exemple, un plan de détection 44.

Une fibre optique 13, dite fibre de retour d'excitation, relie la source de lumière 10 au photodétecteur 40. Cette fibre optique est utile pour réaliser une mesure $S_{source}$ représentant l'intensité de la source, détaillée ultérieurement.

La figure 2 représente une vue en coupe du dispositif, dans le plan de détection 44, formé par l'ensemble des extrémités distales 26 des F fibres de détection. Dans cet exemple, F est égal à 36. Comme on peut le voir, les fibres optiques de détection sont réparties selon :

- un premier groupe $G_1$ de six fibres optiques de détection $22_1$...$22_6$, disposées régulièrement le long d'un cercle centré sur la fibre optique d'émission 12, de telle sorte que l'extrémité distale $26_1...26_6$ de chaque fibre de ce groupe est distante de l'extrémité distale 16 de la fibre optique d'émission 12 d'une première distance $d_1$ égale à 300 $\mu$m ;

- un deuxième groupe $G_2$ de six fibres optiques de détection $22_7...22_{12}$, disposées régulièrement le long d'un cercle centré sur la fibre optique d'émission 12, de telle sorte que l'extrémité distale $26_7...26_{12}$ de chaque fibre de ce groupe est distante de l'extrémité distale 16 de la fibre optique d'émission 12 d'une deuxième distance $d_2$ égale à 700 $\mu$m ;

- un troisième groupe $G_3$ de six fibres optiques de détection $22_{13}...22_{18}$, disposées régulièrement le long d'un cercle centré sur la fibre optique d'émission 12, de telle sorte que l'extrémité distale $26_{13}...26_{18}$ de chaque fibre de ce groupe est distante de l'extrémité distale 16 de la fibre optique d'émission 12 d'une troisième distance $d_3$ égale à 1,1 mm ;

- un quatrième groupe $G_4$ de six fibres optiques de détection $22_{19}...22_{24}$, disposées régulièrement le long d'un cercle centré sur la fibre optique d'émission 12, de telle sorte que l'extrémité distale $26_{19}...26_{24}$ de chaque fibre de ce groupe est distante de l'extrémité distale 16 de la fibre optique d'émission 12 d'une quatrième distance $d_4$ égale à 1,5 mm ;

- un cinquième groupe $G_5$ de six fibres optiques de détection $22_{25}...22_{30}$, disposées régulièrement le long d'un cercle centré sur la fibre optique d'émission 12, de telle sorte que l'extrémité distale $26_{25}...26_{30}$ de chaque fibre de ce groupe est distante de l'extrémité distale 16 de la fibre optique d'émission 12 d'une cinquième distance $d_5$ égale à 2 mm ;

- un sixième groupe $G_6$ de six fibres optiques de détection $22_{31}...22_{36}$, disposées régulièrement le long d'un cercle centré sur la fibre optique d'émission 12, de telle sorte que l'extrémité distale $26_{31}...26_{36}$ de chaque fibre de ce groupe est distante de l'extrémité distale 16 de la fibre optique d'émission 12 d'une sixième distance $d_6$ égale à 2,5 $\mu$m.

Lorsqu'on évoque une distance entre deux fibres, ou entre une fibre ou un faisceau lumineux, on entend une distance centre à centre.

Ainsi, chaque extrémité distale $26_f$ d'une fibre optique de détection $22_f$ est placée, dans un plan perpendiculaire à l'axe longitudinal Z selon lequel s'étendent ces fibres, à une distance $d_f$ de la source de lumière 10 (c'est-à-dire de l'extrémité distale 16 de la fibre d'émission 12), et, par conséquent, à une distance $d_f$ du faisceau lumineux 20 dirigé vers l'échantillon 50.

Selon une variante, les extrémités distales $26_f$ de chaque fibre optique de détection définissent une surface courbe, s'adaptant par exemple à la courbure de la surface de l'échantillon 50.

Comme précédemment indiqué, le dispositif comporte un photodétecteur 40, apte à être couplé à l'extrémité proximale $24_f$ de chaque fibre optique de détection $22_f$. Dans cet exemple, le photodétecteur est un spectrophotomètre, apte à déterminer le spectre d'un rayonnement $52_1...52_F$ rétrodiffusé par l'échantillon lorsque ce dernier est exposé au faisceau lumineux 20. Pour cela, les extrémités proximales 24 de chaque groupe de fibres optiques de détection, décrits ci-dessus, sont regroupées et sont, groupe par groupe, successivement couplées au photodétecteur 40 au moyen d'un commutateur optique 41. Sur la figure 1, la référence 52 désigne un rayonnement rétrodiffusé par l'échantillon.

Dans cet exemple, le dispositif comporte également un système optique 30, présentant un facteur de grandissement G et un axe optique Z'. Dans cet exemple, l'axe optique Z' est confondu avec l'axe longitudinal Z selon lequel s'étendent les fibres optiques de détection, ce qui constitue une configuration préférée.

D'une façon générale, le système optique 30 permet de former une image de la surface de l'échantillon 50 sur le plan de détection 44 formé par les extrémités distales 26 de chaque fibre optique de détection 22, avec un facteur de grandissement G donné. Ainsi, chaque extrémité distale $26_1$, $26_2...26_F$ est respectivement conjuguée à une zone élémentaire de détection $28_1$, $28_2$, $28_f...28_F$ de la surface de l'échantillon. De cette façon, chaque fibre optique de détection $22_1$, $22_2...22_F$ est apte à collecter respectivement un rayonnement élémentaire $52_1$, $52_2$, $52_f...52_F$ rétrodiffusé par l'échantillon, chaque rayonnement élémentaire $52_1$, $52_2,...52_F$ émanant d'une zone élémentaire de détection $28_1$, $28_2...28_F$, à la surface de l'échantillon.

Ainsi, chacune desdites extrémités distales $26_1$, $26_2...26_F$ peut être située dans un plan focal image du système optique 30, et conjuguée à une zone élémentaire de détection $28_1$, $28_2...28_F$ située dans le plan focal objet dudit système optique, à la surface de l'échantillon.

De même, l'extrémité distale 16 de la fibre d'émission 12 est conjuguée à une zone élémentaire d'illumination 18 à la surface de l'échantillon. D'une façon générale, la zone élémentaire d'illumination constitue le point d'impact du faisceau lumineux 20 à la surface de l'échantillon 50.

D'une façon générale, quel que soit le mode de réalisation, le terme zone élémentaire désigne une zone de forme délimitée à la surface de l'échantillon. Une telle zone élémentaire est de préférence ponctuelle, c'est-à-dire que son diamètre ou sa diagonale sont inférieurs à 1 cm, et de préférence inférieurs à 1 mm, voire inférieure à 500 $\mu$m.

Une zone élémentaire de détection peut également prendre une forme annulaire, centrée sur la zone élémentaire d'illumination, en définissant un anneau, ou un arc d'anneau, circulaire ou polygonal. L'épaisseur de l'anneau est alors de préférence inférieure à 1 cm. Une zone élémentaire de détection 28 peut avoir une forme quelconque, sous réserve que cette zone élémentaire soit délimitée par un contour, et distante d'une zone élémentaire d'illumination 18, cette dernière pouvant également avoir une forme quelconque, mais délimitée et distincte d'une zone élémentaire de détection 28.

Une zone élémentaire d'illumination 18 est traversée par le faisceau lumineux 20, se propageant en direction de l'échantillon 50, tandis qu'une zone élémentaire de détection $28_f$ est traversée par un rayonnement rétrodiffusé $52_f$, ce rayonnement étant produit par la rétrodiffusion, dans l'échantillon, du faisceau lumineux 20. Le couplage optique, réalisé par le système optique 30, permet à chaque fibre de détection $22_f$ de collecter le rayonnement rétrodiffusé élémentaire $52_f$, ce dernier correspondant au rayonnement rétrodiffusé traversant la zone élémentaire $28_f$.

L'élément de maintien 42 peut assurer une liaison rigide entre les fibres optiques de détection 22 et le système optique 30, de façon à maintenir le plan de détection 44, formé par les extrémités distales 26 des fibres optiques de détection à une distance fixe du système optique 30.

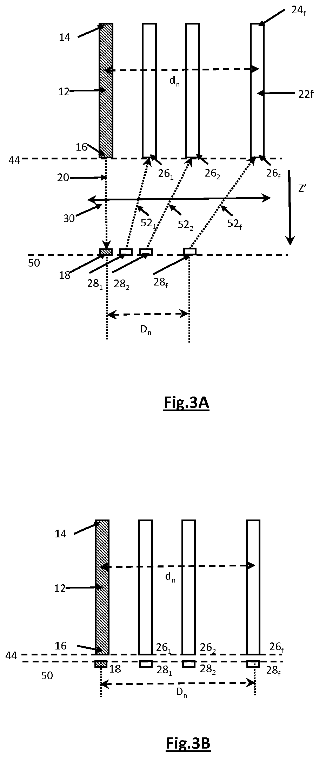

En lien avec la figure 3A, si $d_f$ est la distance entre l'extrémité distale $26_f$ d'une fibre de détection $22_f$ et l'extrémité distale 16 de la fibre d'émission 12, distance calculée dans un plan perpendiculaire à l'axe optique Z', la distance $D_f$ entre la zone élémentaire de détection $28_f$, conjuguée de ladite extrémité distale $26_f$, et la zone élémentaire d'illumination 18, conjuguée de ladite extrémité distale 16, est telle que :

$$D_f = \frac{d_f}{G}$$

La distance $D_f$ est appelée distance de rétrodiffusion, car elle correspond à la distance, à partir de la zone élémentaire d'illumination 18, à laquelle on collecte les photons rétrodiffusés. Cela correspond à la distance entre la zone élémentaire d'illumination 18 et une zone élémentaire de détection 28f.

Ainsi, comme représenté sur la figure 3A, la présence du système optique 30 permet de placer les fibres de détection 22 à distance de l'échantillon à caractériser, selon une configuration dite « à distance ». Cette distance est typiquement de quelques cm, par exemple entre 1 et 30 cm.

Selon une variante, le dispositif est similaire à celui représenté sur la figure 1, mais il ne comporte pas de système optique 30. Cette variante correspond à une configuration de mesure dite configuration « au contact ». Selon cette variante, les fibres de détection 22 sont, de préférence, appliquées directement au contact de l'échantillon (50), du fait de l'absence de système optique entre l'échantillon (50) et l'extrémité distale de chaque fibre optique de détection 22. Dans ce cas, pour chaque fibre optique de détection, $D_f = d_f$.

D'une manière générale, chaque fibre optique de détection $22_f$ est apte à collecter un rayonnement de rétrodiffusion $52_f$ issu d'une zone élémentaire de détection $28_f$, cette dernière étant située à une distance de rétrodiffusion $D_f$ de la zone élémentaire d'illumination 18. Dans cet exemple, du fait de l'arrangement concentrique des fibres de détection autour de la fibre d'illumination, décrit en lien avec la figure 2, le dispositif permet de définir N distances de rétrodiffusion distinctes $D_1..D_n...D_N$, N étant ici égal à 6. A chaque distance de rétrodiffusion $D_n$ correspond une pluralité de rayonnements rétrodiffusés, provenant de zones élémentaires de détection différentes. Par exemple, à la distance de rétrodiffusion $D_1$ correspondent les signaux optiques de rétrodiffusion $52_1$, $52_2$, $52_3$, $52_4$, $52_5$ et $52_6$. Comme précédemment décrit, les fibres de détection correspondant à un même groupe, c'est-à-dire à une même distance de rétrodiffusion, sont couplées. De ce fait, chaque rayonnement rétrodiffusé correspondant à une même distance de rétrodiffusion $D_n$ $(1 \leq n \leq 6)$ est adressé simultanément vers le photodétecteur 40, ce dernier produisant un signal $S_n$, dit signal de rétrodiffusion, représentatif d'un ou plusieurs rayonnements rétrodiffusés à ladite distance de rétrodiffusion $D_n$.

Quelle que soit la configuration du dispositif représenté sur la figure 1, au contact ou à distance, ce dispositif comporte :

- une ligne d'illumination, apte à illuminer la surface de l'échantillon, cette ligne comprenant la source de lumière 10 et la fibre optique d'émission 12 ;
- une ligne de détection, apte à détecter un rayonnement rétrodiffusé $52_f$ par l'échantillon de façon à former un signal de rétrodiffusion $S_n$ ; cette ligne comprend le photodétecteur 40 ainsi que l'éventuel système optique 30 lorsque le dispositif en est équipé.

On décrit à présent, en lien avec la figure 4A, les principales étapes d'un procédé itératif pouvant être mis en œuvre par le dispositif précédemment décrit, afin d'estimer une ou plusieurs propriétés optiques p de l'échantillon examiné. Ce procédé itératif s'applique à la configuration « au contact » ou à la configuration « à distance » précédemment décrites.

Le terme propriété optique p désigne par exemple un ou plusieurs facteurs gouvernant l'absorption et/ou la diffusion des photons dans l'échantillon examiné, en particulier un coefficient d'absorption, un coefficient de diffusion, un coefficient de diffusion réduit, un coefficient d'anisotropie de la diffusion. Dans cet exemple, les propriétés optiques déterminées sont le coefficient d'absorption $\mu_a$ et le coefficient de diffusion réduit $\mu'_s$.

1<sup>ère</sup> étape 110 : application du dispositif préalablement décrit, en regard de l'échantillon 50.

2<sup>ième</sup> étape 120 : illumination de l'échantillon en dirigeant un faisceau lumineux 20 contre la surface de l'échantillon, la partie de la surface de l'échantillon illuminée constituant la zone élémentaire d'illumination 18.

3<sup>ième</sup> étape 130 : collection d'un rayonnement $52_1$, $52_2$...$52_F$ rétrodiffusé par l'échantillon, émanant respectivement de chaque zone élémentaire de détection $28_1$, $28_2$, ... $28_F$, par la fibre optique $22_1$, $22_2$,...$22_F$ de détection dont l'extrémité distale $26_1$, $26_2$,... $26_F$ est respectivement conjuguée à ladite zone élémentaire $28_1$, $28_2$, ... $28_F$.

4<sup>ième</sup> étape 140 : mesure, à l'aide d'un photodétecteur 40, d'un signal de rétrodiffusion $S_n$ représentatif de la rétro-diffusion à chaque distance de rétrodiffusion $D_n$. Comme précédemment indiqué, le signal détecté $S_n$ est, dans cet exemple, établi en cumulant les signaux optiques collectés par les fibres optiques de détection d'un même groupe $G_n$, c'est-à-dire correspondant à une même distance de rétrodiffusion. Le signal de rétrodiffusion $S_n$ cumule alors plusieurs rayonnements rétrodiffusés $52_n$, chacun d'entre eux étant émis selon une même distance de rétrodiffusion $D_n$.

Lorsque le détecteur est un détecteur spectrométrique, il génère le spectre du signal détecté $S_n$, noté $Sp(S_n)$, duquel on peut extraire des composantes spectrales $S_n(\lambda)$, représentant le signal rétrodiffusé à la distance $D_n$, et à la longueur d'onde $\lambda$.

5<sup>ième</sup> étape 150 : A l'aide de chaque signal $S_n(\lambda)$, associé à une distance de rétrodiffusion $D_n$, détermination d'une grandeur d'intérêt $R_n(\lambda)$, sur la base de laquelle seront déterminées les propriétés optiques p de l'échantillon examiné. Dans cet exemple, la grandeur d'intérêt $P_n(\lambda)$ est une réflectance de l'échantillon. D'une façon générale, le terme réflectance représente l'intensité d'un rayonnement rétrodiffusé par l'échantillon, normalisée par l'intensité du faisceau incident à l'échantillon. Sa valeur dépend de la longueur d'onde $\lambda$, du fait de l'évolution des propriétés optiques du milieu diffusant examiné en fonction de la longueur d'onde.

Dans cet exemple, la réflectance $P_n(\lambda)$ dépend du signal rétrodiffusé $S_n(\lambda)$ à la distance $D_n$, normalisé par une quantité de lumière $S_{source}(\lambda)$ émise par la source, à la longueur d'onde $\lambda$, du temps d'acquisition du signal rétrodiffusé $S_n$, ainsi que d'un facteur de calibration. La réflectance $P_n(\lambda)$ peut être définie selon l'expression :

$$R_n(\lambda) = \frac{S_n(\lambda) - S_{ref}(\lambda)}{S_{source}(\lambda) \times t} \times f_n^i(\lambda) \quad (1)$$

où :

- $S_n(\lambda)$ est le signal de rétrodiffusion détecté, correspondant à la distance de rétrodiffusion $D_n$ ;
- $S_{ref}(\lambda)$ est un signal de référence, représentatif de signaux parasites, tel le bruit du détecteur 40 ou des réflexions parasites de l'éventuel système optique 30, obtenu en activant la source de lumière, mais sans échantillon, ce dernier étant par exemple remplacé par un écran absorbant de type écran noir ;
- $S_{source}(\lambda)$ est le signal produit par la source de lumière. $S_{source}(\lambda)$ peut notamment être établi en couplant la source de lumière au photodétecteur, par exemple au moyen d'une fibre optique dite de retour d'excitation 13, représentée sur la figure 1 ; Dans ce cas, le photodétecteur acquiert un signal $S_{source\text{-}direct}$ duquel on peut soustraire un signal $S_{ref\text{-}source}$ représentatif du bruit du détecteur. Si $t_{source}$ désigne le temps d'acquisition du signal $S_{source}\text{-}direct$, $S_{source}$ peut être tel que :

$$S_{source}(\lambda) = \frac{S_{source-direct}(\lambda) - S_{ref-source}(\lambda)}{t_{source}}.$$

- $f_n^i(\lambda)$ est un facteur de calibration, correspondant à la distance de rétrodiffusion $D_n$ et à la longueur d'onde $\lambda$. L'exposant i désigne le rang de l'itération, tandis que l'indice n désigne la distance de rétrodiffusion $D_n$. Ce facteur prend en compte l'effet de différents composants de la ligne d'illumination et de la ligne de détection sur le signal de rétrodiffusion. Il s'agit de tenir compte, par exemple, de l'efficacité de collection par les fibres de détection 22, de la sensibilité du photodétecteur 40, de l'inhomogénéité du faisceau d'illumination 20 ou, le cas échéant, de l'efficacité de collection de la lumière rétrodiffusée par le système optique 30. Ce facteur de calibration est déterminé au cours d'une phase de calibration. Cette phase de calibration, mettant en œuvre des échantillons de calibration, est réalisée préalablement ou postérieurement à la mesure sur l'échantillon, et est décrite par la suite.
- t est le temps d'acquisition du signal de rétrodiffusion $S_n$.

La phase de calibration évoquée ci-dessus a pour but d'établir un facteur de calibration $f_{n,pcalib}(\lambda)$ en appliquant le dispositif décrit ci-dessus en regard d'un échantillon de calibration, dont les propriétés optiques $p_{calib}$ sont connues. Par exemple, $f_{n,pcalib}$ peut être tel que :

$$f_{n,pcalib}(\lambda) = \frac{R_{calib-n}^{model}(\lambda)}{\frac{S_{calib-n}(\lambda)-S_{ref}(\lambda)}{S_{source}(\lambda) \times t_{calib}}} = \frac{R_{calib-n}^{model}(\lambda)}{R_{calib-n}(\lambda)} \quad (2)$$

- $S_{calib-n}(\lambda)$ est un signal de rétrodiffusion détecté, correspondant à la distance de rétrodiffusion $D_n$ en utilisant le même dispositif que celui mis en œuvre pour acquérir le signal de rétrodiffusion $S_n(\lambda)$, le dispositif étant utilisé dans la même configuration : même source, même positionnement par rapport à l'échantillon ;
- $S_{ref}(\lambda)$ est le signal de référence décrit en lien avec l'expression (1) ;
- $S_{source}(\lambda)$ est le signal représentant l'intensité du faisceau d'illumination produit par la source de lumière, décrit en lien avec l'expression (1) ;
- $t_{calib}$ est le temps d'acquisition du signal $S_{calib-n}(\lambda)$ ;
- $R_{calib-n}(\lambda)$ est la réflectance de l'échantillon de calibration, associée à une distance de rétrodiffusion $D_n$. Dans cet

exemple, $R_{calib-n}(\lambda) = \frac{S_{calib-n}(\lambda)-S_{ref}(\lambda)}{S_{source}(\lambda) \times t_{calib}}$

- $R_{calib-n}^{model}(\lambda)$ est une estimation, de la réflectance $R_{calib-n}(\lambda)$, cette estimation pouvant être réalisée par modélisation du parcours de la lumière dans l'échantillon de calibration, en particulier au moyen de codes de calcul de type Monte-Carlo ou par un modèle analytique.

Ainsi, le facteur de calibration $f_{n,pcalib}(\lambda)$ est une comparaison entre une grandeur d'intérêt, en l'occurrence une réflectance, modélisée et cette même grandeur d'intérêt mesurée par le dispositif, sur un échantillon de calibration. Cette comparaison prend généralement la forme d'un ratio.

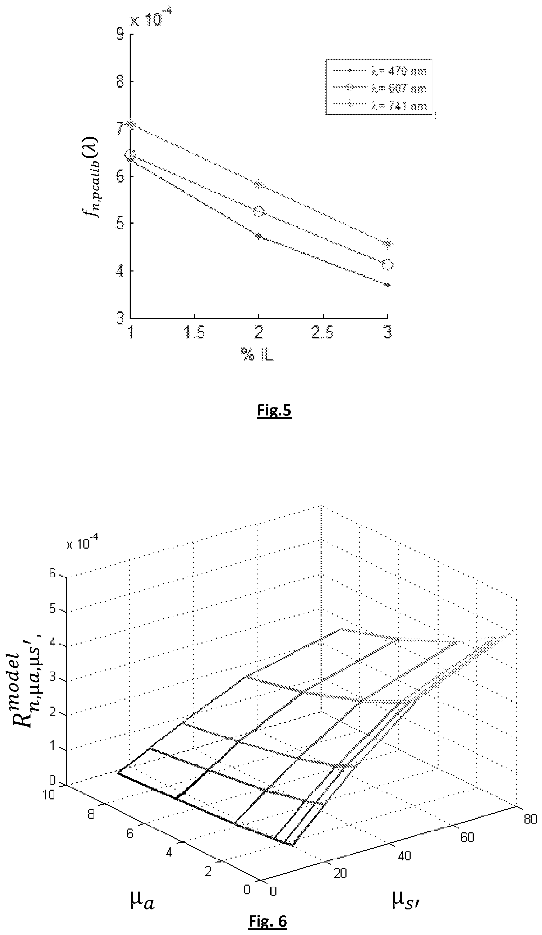

Cependant, dans l'art antérieur, ce facteur de calibration est obtenu sur un échantillon, dont les propriétés optiques $p_{calib}$ sont connues, mais ne sont pas forcément représentatives des propriétés optiques de l'échantillon examiné. Or, les inventeurs ont déterminé que la valeur de ce facteur de calibration peut évoluer, selon les propriétés optiques de l'échantillon. Par exemple, la figure 5 représente différentes valeurs de ce facteur de calibration, obtenu en utilisant différents échantillons de calibration, aux longueurs d'onde $\lambda$ = 470 nm, $\lambda$ = 607 nm et $\lambda$ = 741 nm. Pour réaliser ces essais, on a constitué des échantillons d'eau, dont les propriétés de diffusion et d'absorption sont respectivement modifiées par incorporation d'intralipide et d'encre de Chine. Les échantillons de calibration utilisés comportent une concentration d'intralipide %IL respectivement égale à 1%, 2% et 3% ce qui leur confère des propriétés de diffusion différentes, le coefficient d'absorption étant égal à 0,4 cm$^{-1}$ à 600 nm$^{-1}$. Les facteurs de calibration représentés ont été déterminés en considérant une distance de rétrodiffusion de 1.1 mm, le dispositif 1 étant placé à distance de chaque échantillon de calibration, la distance entre l'échantillon et les fibres optiques de détection s'élevant à 20 cm.

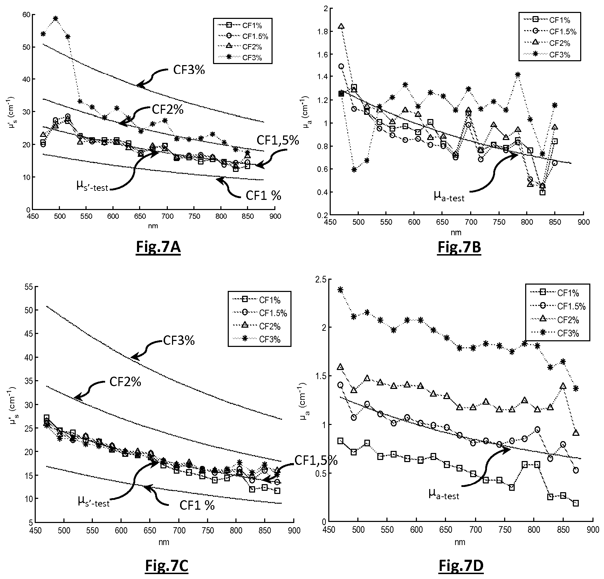

En se basant sur des essais expérimentaux, décrits en lien avec les figures 7A à 7D, les inventeurs ont estimé qu'il était préférable d'utiliser un facteur de calibration qui soit le plus représentatif possible des propriétés optiques de l'échantillon examiné. Or, lors de la première itération, ces propriétés ne sont pas connues. Aussi, lors de la première itération (i = 1), on utilise un facteur de calibration initial, noté $f_n^{i=1}(\lambda)$, déterminé arbitrairement, par exemple en se basant sur un a priori quant aux propriétés optiques de l'échantillon examiné.

6$^{ième}$ étape 160 : pour au moins une longueur d'onde $\lambda$, et en considérant au moins autant de distances $D_n$ de rétrodiffusion différentes qu'il y a de propriétés optiques à estimer, détermination des propriétés optiques (p) présentant le moindre écart entre la réflectance $R_n(\lambda)$, déterminée lors de l'étape précédente, à la longueur d'onde $\lambda$, et une réflectance modélisée $R_{n,p}^{model}(\lambda)$, cette réflectance étant modélisée en considérant une pluralité de valeurs desdites propriétés optiques p, à ladite distance de rétrodiffusion $D_n$. Cette détermination peut être réalisée par la minimisation d'un écart quadratique, et par exemple selon l'expression :

$$p = \underset{p}{\mathrm{argmin}}\left(\sum_{n=1}^{N}\left(R_{n,p}^{model}(\lambda) - R_n(\lambda)\right)^2\right) \quad (3)$$

- N désigne le nombre de distances de rétrodiffusion prises en compte,
- $R_{n,p}^{model}$ est une réflectance modélisée, à la distance de rétrodiffusion $D_n$, en prenant en compte des valeurs prédéterminées d'au moins une propriété optique p. Le paramètre p peut correspondre à une propriété optique, ou un ensemble de propriétés optiques.

Dans cet exemple, les propriétés optiques recherchées sont $\mu_a(\lambda)$ et $\mu'_s(\lambda)$. Ainsi, le couple $(\mu_a(\lambda), \mu'_s(\lambda))$ recherché est celui présentant le moindre écart entre la réflectance mesurée $R_n(\lambda)$, à la longueur d'onde $\lambda$, et une réflectance modélisée $R_{n,\mu a,\mu s'}^{model}(\lambda)$ pour différentes valeurs de $\mu_a(\lambda)$ et de $\mu'_s(\lambda)$, à ladite distance de rétrodiffusion $D_n$. Cette détermination peut être réalisée selon l'expression

$$\left(\mu_a(\lambda), \mu'_s(\lambda)\right) = argmin_{\left(\mu_a(\lambda),\mu'_s(\lambda)\right)}\left(\sum_{n=1}^{N}\left(R_{n,\mu a,\mu s'}^{model}(\lambda) - R_n(\lambda)\right)^2\right) \quad (3'),$$

$R_{n,\mu a,\mu s}^{model}(\lambda)$ désignant une réflectance modélisée, à la distance de rétrodiffusion $D_n$, en considérant différentes valeurs de $\mu_a$ et $\mu_s'$.

Les différentes valeurs de réflectance modélisée $R_{n,\mu a,\mu s}^{model}(\lambda)$ sont obtenues, pour une pluralité de couples de valeurs $\mu_a$, $\mu_s'$ au cours d'une phase de paramétrage, par simulation numérique mettant en œuvre une méthode de type Monte-Carlo ou par un modèle analytique. Un modèle analytique peut être utilisé, de préférence, qu'au-delà d'une certaine distance de rétrodiffusion. Pour une distance de rétrodiffusion $D_n$ donnée, on peut établir une pluralité de réflectances $R_{n,\mu a,\mu s'}^{model}(\lambda)$ modélisées en fonction de $\mu_a$ et de $\mu_s'$. La figure 6 donne un exemple de représentation de telles réflectances modélisées, en considérant une distance de rétrodiffusion $D_n$ égale à 700 $\mu$m et en prenant en compte des valeurs du coefficient d'absorption comprises entre 0 et 10 cm$^{-1}$, ainsi que des valeurs du coefficient de diffusion réduit comprises entre 0 et 80 cm$^{-1}$. Les étapes 150 et 160 sont mises en œuvre par le processeur 48, préalablement programmé à cet effet, et dont les données d'entrée sont les mesures des signaux de rétrodiffusion $S_n(\lambda)$ réalisées par le photodétecteur 40. Chaque facteur de calibration, ainsi que chaque valeur $R_{n,p}^{model}(\lambda)$, peuvent être stockés dans une mémoire, par exemple la mémoire 49, reliée au processeur 48.

7ième étape 170 : mise à jour du facteur de calibration.

La mise en œuvre de cette étape suppose que différents facteurs de calibration $f_{n,P}(\lambda)$ correspondant à des échantillons de calibration de propriétés optiques p connues, à une distance de rétrodiffusion $D_n$ et à une longueur d'onde, $\lambda$ aient été préalablement déterminés.

D'une façon générale, la notation $f_{n,p}(\lambda)$ correspond à un facteur de calibration correspondant aux propriétés optiques p, à la distance de rétrodiffusion $D_n$, pour la longueur d'onde $\lambda$. Ce facteur de calibration peut être obtenu à l'aide d'une mesure sur un échantillon de calibration, auquel cas on peut également le désigner par $f_{n,calibp}(\lambda)$, l'indice *calibp* se référant à l'échantillon de calibration de propriétés optiques p. Il peut également être déterminé par calcul d'interpolation, comme décrit ci-après.

Ces différents facteurs de calibration peuvent être obtenus expérimentalement, en utilisant des échantillons de calibration de propriétés optiques p connues, comme décrit en lien avec la figure 5 ou l'équation (2). Lorsque plusieurs mesures expérimentales ont été effectuées, on peut déterminer des facteurs de calibration interpolés, entre deux facteurs de calibrations $f_{n,p}(\lambda)$, $f_{n,p'}(\lambda)$ correspondant respectivement à des échantillons de propriétés optiques p et p'. L'interpolation peut être une interpolation linéaire.

On peut alors disposer d'une bibliothèque de facteurs de calibration $f_{n,p}(\lambda)$ correspondant à différentes distances de rétrodiffusion $D_n$, à différentes propriétés optiques p et à différentes longueurs d'onde $\lambda$. Ces facteurs de calibration sont stockés dans une mémoire, par exemple la mémoire 49 reliée au processeur 48. Les inventeurs estiment qu'il est suffisant qu'entre deux itérations, les facteurs de calibration soient mis à jour en fonction d'une propriété de diffusion de l'échantillon, une mise à jour en fonction d'une propriété d'absorption pouvant être omise.

L'étape 170 consiste à mettre à jour le facteur de calibration mis en œuvre dans le procédé, en remplaçant chaque facteur de calibration $f_n^i(\lambda),$ associé à une distance de rétrodiffusion $D_n$ lors de l'itération courante $i$ par un facteur de calibration correspondant aux propriétés optiques p déterminées lors de l'étape 160, ou par un facteur de calibration associé à une propriété optique la plus proche de la propriété optique p déterminée lors de l'étape 160 précédente. Aussi, lors de l'étape 170, $f_n^{i+1}(\lambda) = f_{n,p}(\lambda),$ le paramètre p étant le paramètre optique déterminé lors de l'étape 160. Ce facteur de calibration $f_n^{i+1}(\lambda)$ est alors utilisé lors de l'étape 150 de l'itération suivante i+1.

Le processus itératif est stoppé au bout d'un nombre d'itérations prédéterminé, ou lorsque l'écart entre propriétés optiques $p^i$, $p^{i+1}$ déterminées au cours de l'étape 160 de deux itérations successives i et i+1 est inférieur à un seuil prédéterminé. On passe alors à l'étape 180 de sortie de l'algorithme.

La figure 4B représente une variante de ce procédé, dans lesquelles les étapes 110 à 180 sont analogues à celles exposées en lien avec la figure 4A. Cependant, préalablement à la mise en œuvre de ce procédé, on place le dispositif 1 face à un échantillon de calibration dont les propriétés optiques $p_{calib}$ sont connues. En effet, les inventeurs ont constaté qu'un facteur de calibration $f_{n,p}(\lambda)$ n'est pas stable dans le temps, cela du fait de l'évolution des propriétés des composants constituant la ligne d'illumination et la ligne de détection. Cela peut provenir d'une évolution normale de ces composants, par exemple l'usure d'une fibre optique, ou le vieillissement de la source, ou encore un léger déplacement du système optique. De ce fait, un facteur de calibration $f_{n,p,t_0}(\lambda)$ déterminé à un instant $t_0$ peut-être différent d'un facteur de calibration $f_{n,p,t}(\lambda)$ déterminé à un instant $t,$ et cela d'autant plus que l'intervalle temporel $\Delta T = t- t_0$ est important. Afin de prendre en compte une telle dérive, les inventeurs ont mis en œuvre une réactualisation des facteurs de calibrations $f_{n,p,t_0}(\lambda)$ déterminés à un instant $t_0$ et stockés en mémoire. C'est l'objet des étapes 100 à 106.

Les étapes 100, 101, 102 et 103 sont respectivement analogues aux étapes 110, 120, 130 et 140, la seule différence étant que l'échantillon analysé est l'échantillon de calibration. Les fibres optiques de détection 22 collectent une pluralité de rayonnements rétrodiffusés $52_1^*...52_F^*$, l'exposant * désignant le fait qu'on utilise un échantillon de calibration. Le photodétecteur 40 forme alors autant de signaux de rétrodiffusion $S_{calib-1}(\lambda)...S_{calib-N}(\lambda)$ qu'il y a de distances de rétrodiffusion $D_1...D_N$ différentes.

Comme indiqué en lien avec l'équation (2), l'étape 104 permet l'obtention d'une réflectance $R_{calib-n}(\lambda),$ à chaque distance de rétrodiffusion $D_n$ et pour chaque longueur d'onde $\lambda$ considérée. Lors de l'étape 105, on détermine un facteur de calibration $f_{n,pcalib*,t}(\lambda)$ correspondant de l'échantillon de calibration, selon l'équation 2.

Lors de l'étape 106, on détermine un facteur de réactualisation $k_{n,t}(\lambda),$ associé à une distance de rétrodiffusion $D_n$ et à une longueur d'onde $\lambda$, $k_{n,t}(\lambda)$ étant tel que :

$$k_{n,t}(\lambda) = = \frac{f_{n,pcalib*,t}(\lambda)}{f_{n,pcalib*,t0}(\lambda)} \quad (4)$$

- $f_{n,pcalib*,t}(\lambda)$ désignant le facteur de calibration, à la longueur d'onde $\lambda$, réalisé à l'instant courant (instant t), sur un échantillon de calibration de propriétés optiques $p_{calib}^*$, et correspondant à la distance de rétrodiffusion $D_n$ ;
- $f_{n,pcalib*,t0}(\lambda)$ désignant le facteur de calibration, à la longueur d'onde $\lambda$, réalisé à un instant $t_0$, préalablement à l'instant courant, sur le même échantillon de calibration, de propriétés optiques $p_{calib}^*$, et correspondant à la distance de rétrodiffusion $D_n$.

En combinant les équations (4) et (2), on obtient :

$$k_{n,t}(\lambda) = = \frac{f_{n,pcalib*,t}(\lambda)}{f_{n,pcalib*,t0}(\lambda)} = \frac{\frac{S_{calib*-n,t0}(\lambda)-S_{ref,t0}(\lambda)}{S_{source,t0}(\lambda)} \times t_{calib*,t}}{\frac{S_{calib*-n,t}(\lambda)-S_{ref,t}(\lambda)}{S_{source,t}(\lambda)} \times t_{calib*,t0}} \quad (4')$$

Les indices $t$ et $t_0$ se réfèrent respectivement aux instants de mesure $t$ et $t_0$. L'exposant * représente une mesure réalisée sur un échantillon de calibration utilisé pour déterminer le facteur de réactualisation. Le facteur de réactualisation $k_{n,t}(\lambda)$ est essentiellement gouverné par l'évolution des signaux rétrodiffusés $S_{calib*-n,t0}(\lambda)$ et $S_{calib*-n,t}(\lambda)$.

Aussi, d'une façon plus générale, le facteur de réactualisation $k_{n,t}(\lambda)$ est déterminé en comparant :

- un signal de rétrodiffusion $S_{calib*-n,t}(\lambda)$, représentant un rayonnement rétrodiffusé émanant de la surface d'un échantillon de calibration, à une distance de rétrodiffusion ($D_n$) d'une zone d'illumination dudit échantillon de calibration, ce dernier étant illuminé par ledit faisceau lumineux (20) ;
- et un signal de rétrodiffusion $S_{calib*-n,t0}(\lambda)$, mesuré, dans les mêmes conditions, à un instant $t_0$, antérieur à l'instant $t$.

L'échantillon de calibration utilisé pour la détermination du facteur de réactualisation, selon les équations (4) et (4'), peut être n'importe quel échantillon de calibration. De préférence, il s'agit d'un échantillon de calibration aisément transportable, dont les propriétés optiques sont particulièrement stables, en particulier entre les instants $t$ et $t_0$. Il peut par exemple s'agir d'un échantillon réalisé à l'aide d'une résine solide, dont les propriétés optiques d'absorption et de diffusion sont respectivement ajustées par adjonction d'encre de Chine et de particules diffusantes d'oxyde de Titane ($TiO_2$).

Les inventeurs ont estimé qu'un tel facteur de réactualisation peut s'appliquer à l'ensemble des facteurs de calibration préalablement calculés, qu'ils soient issus d'autres échantillons de calibration, moins stables ou moins transportables, ou de calculs d'interpolation. Ainsi, chaque facteur de calibration $f_{n,p,t0}(\lambda)$, après avoir été déterminé à un instant $t_0$, antérieur à l'instant t, et stocké dans la mémoire 49, peut-être simplement réactualisé par la formule de mise à jour :

$$f_{n,p,t}(\lambda) = k_{n,t}(\lambda) \times f_{n,p,t0}(\lambda) \ (5)$$

où :

- $f_{n,p,t}(\lambda)$ désigne le facteur de calibration, correspondant aux propriétés optiques p, et à la distance de rétrodiffusion $D_n$, réactualisé à l'instant courant $t$ ;
- $f_{n,p,t0}(\lambda)$ désigne le facteur de calibration, correspondant aux propriétés optiques p, et à la distance de rétrodiffusion $D_n$, déterminé à l'instant $t_0$ et stocké dans la mémoire 49. On remarque qu'un seul échantillon de calibration peut suffire pour déterminer le facteur de réactualisation $k_{n,t}(\lambda)$, et permettre la réactualisation de l'ensemble des facteurs de calibration $f_{n,p,t0}(\lambda)$ établis auparavant, correspondant à la distance de rétrodiffusion $D_n$ à laquelle est associé le facteur de réactualisation, et stockés dans la mémoire 49.

Le facteur de réactualisation $k_{n,t}(\lambda)$ est ensuite mis en œuvre, sous forme de terme multiplicatif, dans l'étape 150 de détermination d'une grandeur d'intérêt $R_n(\lambda)$ à partir du signal rétrodiffusé $S_n(\lambda)$. L'expression (1) peut alors être remplacée par l'expression (1') :

$$R_n(\lambda) = \frac{S_n(\lambda) - S_{ref}(\lambda)}{S_{source}(\lambda) \times t} \times f_n^i(\lambda) \times k_{n,t}(\lambda) \quad (1')$$

On va à présent décrire des essais expérimentaux mettant en œuvre le dispositif représenté sur les figures 1 et 2, dans une configuration à distance ou dans une configuration au contact. Le dispositif est disposé en regard d'échantillons tests comportant une base d'eau, et dont les propriétés optiques d'absorption et de diffusion sont ajustées respectivement par ajout d'encre de Chine et d'Intralipide.

Durant ces essais, les propriétés optiques p recherchées sont le coefficient d'absorption $\mu_a$ et le coefficient de diffusion réduit $\mu_{s'}$.

Les figures 7A et 7B représentent des estimations respectives du coefficient de diffusion réduit et du coefficient d'absorption en fonction de la longueur d'onde, lors d'essais réalisés au contact sur un échantillon de test dont les propriétés optiques sont connues : son coefficient d'absorption est égal à 1 cm$^{-1}$ à 600nm, tandis que son coefficient de diffusion réduit, équivalent à une concentration de 1,5% d'intralipide, s'élève à 22 cm$^{-1}$ à 600 nm.

Sur la figure 7A, chaque courbe en pointillés correspond à la valeur théorique du coefficient de diffusion réduit de 4 échantillons de calibration, en fonction de la longueur d'onde. Chaque échantillon de calibration a un même coefficient d'absorption $\mu_a$ = 0.4 cm$^{-1}$ à 600 nm et une concentration d'intralipide respectivement égale à 1%, 1.5%, 2% et 3%. Leurs coefficients de diffusion réduits $\mu_{s'}$, à 600 nm, sont respectivement 13,5 cm$^{-1}$, 20,3 cm$^{-1}$, 27 cm$^{-1}$ et 40,6 cm$^{-1}$. Ces quatre échantillons de calibration sont respectivement désignés par « CF1% », « CF1.5% », « CF2% » et « CF3% ». Ces échantillons de calibration sont utilisés pour établir un facteur de calibration $f_{n,p}(\lambda)$, associé aux propriétés optiques p de chaque échantillon.

L'échantillon test a fait l'objet d'une illumination par la source de lumière 10, durant laquelle on a détecté le signal rétrodiffusé $S_2(\lambda).,.S_6(\lambda)$ correspondant respectivement à 5 distances de rétrodiffusion $D_2...D_6$. Le spectre en longueur d'onde de chacun de ces signaux détectés a été réalisé, dans une bande spectrale comprise entre 470 nm et 880 nm. La réflectance de l'échantillon test $P_2(\lambda)...P_6(\lambda)$, aux différentes distances de rétrodiffusion a été déterminée en utilisant l'expression (1).

A chaque longueur d'onde λ, on a successivement considéré chaque facteur de calibration $f_{n,p}(\lambda)$, associé à chaque échantillon de calibration, de façon à calculer 4 mesures de la réflectance. On a alors estimé le coefficient de diffusion réduit $\mu_{s}{}'(\lambda)$ (cf. courbes en traits pleins de la figure 7A) et le coefficient d'absorption $\mu_a(\lambda)$ (cf. courbes en traits pleins de la figure 7B), chaque estimation étant respectivement associée à la prise en compte d'un facteur de calibration établi à l'aide d'un échantillon de calibration, comme indiqué dans la légende de ces courbes.

Sur la figure 7A, la courbe en pointillés désignée «$\mu_{s'\text{-test}}$» correspond au coefficient de diffusion réduit $\mu_{s'}(\lambda)$ de l'échantillon de test. Elle représente la valeur exacte du coefficient de diffusion réduit en fonction de la longueur d'onde. Les courbes en traits pleins correspondent aux estimations de ce coefficient, à différentes longueurs d'onde. Il apparaît que la prise en compte d'un facteur de calibration basé sur l'échantillon de calibration CF3% aboutit à une estimation erronée de $\mu_{s'}(\lambda)$. Les estimations utilisant un facteur de calibration établi avec les autres échantillons de calibration (CF1.5%, CF1% et CF2%) sont plus conformes à la réalité, la meilleure estimation étant obtenue avec le facteur de calibration établi avec l'échantillon de calibration CF1.5%. Cela confirme l'hypothèse de base de cette invention, selon laquelle les propriétés optiques d'un échantillon sont d'autant mieux estimées qu'elles sont calculées en se basant sur un facteur de calibration $f_{n,p}(\lambda)$ représentatif des propriétés optiques dudit échantillon.

Sur la figure 7B, la courbe en pointillés désignée «$\mu_{a\text{-test}}$» correspond au coefficient d'absorption $\mu_a(\lambda)$ de l'échantillon de test. Elle représente la valeur exacte du coefficient d'absorption en fonction de la longueur d'onde. Les courbes en traits pleins correspondent à des estimations de ce coefficient, à différentes longueurs d'onde, chaque estimation étant réalisée en considérant un facteur de calibration $f_{n,p}(\lambda)$ déterminé respectivement avec chaque échantillon de calibration. De même que sur la figure 7A, les estimations basées sur l'échantillon CF3% mènent à des résultats erronés, la meilleure estimation étant celle prenant en compte l'échantillon de calibration CF1.5%.

Les figures 7C et 7D représentent respectivement des résultats similaires aux figures 7A et 7B, le dispositif utilisé comportant un système optique 30, permettant son utilisation à distance de l'échantillon. Dans cette configuration, l'extrémité distale des fibres optiques de détection est placée à 20 cm de la surface de l'échantillon. On constate que la prise en compte d'un facteur de calibration représentatif des propriétés optiques de l'échantillon examiné améliore très significativement l'estimation du coefficient d'absorption. Plus précisément, on remarque que la prise en compte d'un facteur de calibration basé sur des propriétés optiques différentes de l'échantillon examiné mène à des erreurs significatives dans l'estimation du coefficient d'absorption, comme le montre la courbe CF3% de la figure 7D.

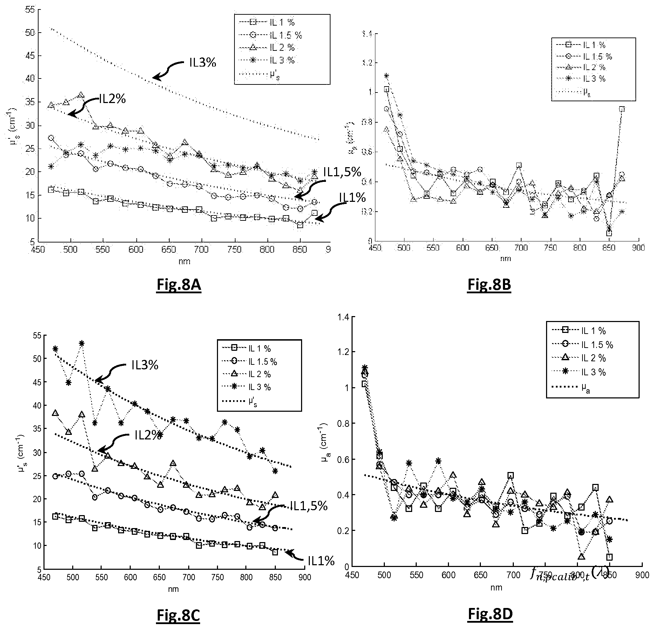

Les figures 8A, 8B et 8C, 8D représentent des estimations des propriétés optiques ($\mu_{s'}(\lambda)$ et $\mu_a(\lambda)$) respectivement selon l'art antérieur et en mettant en œuvre l'invention, le dispositif étant appliqué au contact de quatre échantillons tests. Les valeurs réelles du coefficient de diffusion réduit de chaque échantillon de test sont représentées en pointillés sur les figures 8A et 8C. Les valeurs réelles du coefficient d'absorption de chaque échantillon de test sont représentées en pointillés sur les figures 8B et 8D. Ces 4 échantillons tests, désignés IL1%, IL1.5%, IL2%, IL3% sont respectivement identiques aux échantillons de calibration CF1%, CF1.5%, CF2% et CF3% précédemment décrits. Sur chaque figure, les courbes en traits pleins correspondent à des estimations des coefficients $\mu_{s'}(\lambda)$ ou $\mu_a(\lambda)$ de chaque échantillon de test.

La figure 8A représente des estimations du coefficient de diffusion réduit de chaque échantillon test. Sur cette figure, pour chaque estimation, on a utilisé le même facteur de calibration, établi à l'aide de l'échantillon de calibration CF1%. Le coefficient de diffusion réduit est correctement estimé pour l'échantillon IL1%, puisque le procédé utilise un facteur de calibration établi avec ce même échantillon. Le coefficient de diffusion réduit de l'échantillon IL1.5% est également déterminé correctement. En revanche, les coefficients de diffusion réduits des échantillons IL2% et IL3% ne sont pas estimés avec une précision satisfaisante.

La figure 8C représente des mesures similaires, en mettant en œuvre l'algorithme précédemment décrit, avec, lors de la première itération, l'utilisation d'un facteur de calibration établi à l'aide de l'échantillon de calibration IL1%. Contrairement aux résultats présentés sur la figure 8A, le coefficient de diffusion réduit de chaque échantillon de test a été correctement estimé.

La figure 8B représente des estimations du coefficient d'absorption de chaque échantillon test. Sur cette figure, pour chaque échantillon test, on a utilisé le même facteur de calibration, établi à l'aide de l'échantillon de calibration CF1%. La figure 8D représente des mesures similaires, en mettant en œuvre l'algorithme précédemment décrit, avec, lors de la première itération, l'utilisation d'un facteur de calibration établi à l'aide de l'échantillon de calibration CF1%. La précision de l'estimation est satisfaisante dans les deux cas, mais la mise en œuvre de l'algorithme accroît cette précision.

Pour chacune de ces figures, on a estimé la racine carrée de l'erreur quadratique moyenne, notée ε, normalisée, estimée selon l'expression :

$$\varepsilon = \sqrt{\underset{\lambda}{\text{mean}}\left[\frac{p(\lambda) - \widetilde{p(\lambda)}}{p(\lambda)}\right]^2} \times 100$$

avec :

- $p(\lambda)$ = valeur réelle de la propriété optique p à la longueur d'onde $\lambda$, la propriété optique étant soit le coefficient de diffusion réduit $\mu_{s'}$ soit le coefficient d'absorption $\mu_a$.

- $\widetilde{p(\lambda)}$ = estimation de la propriété optique p à la longueur d'onde $\lambda$, la propriété optique étant soit le coefficient de diffusion réduit $\mu_{s'}$ soit le coefficient d'absorption $\mu_a$.

Les résultats correspondant aux différentes figures 8A (estimation de $\mu_{s'}$ sans mise en œuvre de l'invention), 8B (estimation de $\mu_a$ sans mise en œuvre de l'invention), 8C (estimation de $\mu_{s'}$ avec mise en œuvre de l'invention), et 8D (estimation de $\mu_a$ avec mise en œuvre de l'invention), sont reportés sur le tableau 1 ci-dessous :

Tableau 1

| $\varepsilon$ | | IL1% | IL1.5% | IL2% | IL3% |
|---|---|---|---|---|---|
| $\mu a$ | Figure 8B | 29.1% | 20.7% | 23.4% | 29.3% |
| | Figure 8D | 29.1% | 17.5% | 31.4% | 26.5% |
| $\mu's$ | Figure 8A | 3.7% | 5.5% | 6.7% | 38.9% |
| | Figure 8C | 3.7% | 3.7% | 7.1% | 6.7% |

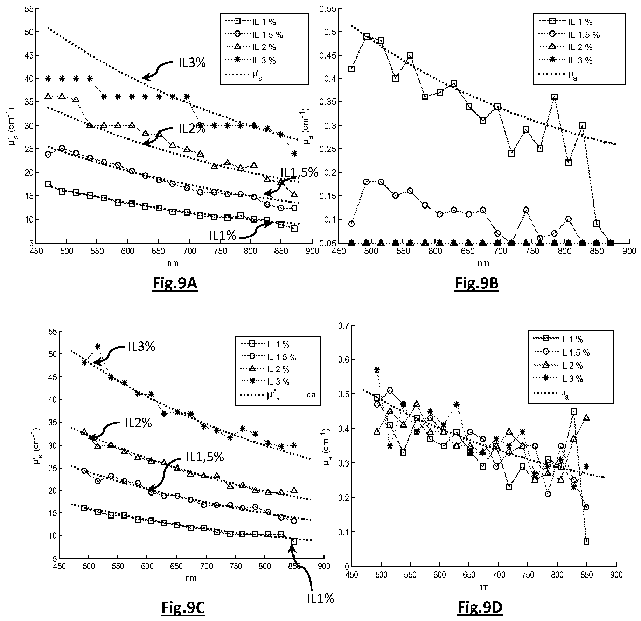

Les figures 9A, 9B, 9C et 9D représentent des essais similaires à ceux reportés respectivement reportés sur les figures 8A, 8B, 8C et 8D, la seule différence étant que le dispositif est utilisé selon une configuration « à distance », et en mettant en œuvre un système optique de focalisation, la distance entre l'extrémité de chaque fibre de détection et l'échantillon étant de 20cm. Pour chacune de ces figures, on a également estimé la racine carrée de l'erreur quadratique moyenne, $\varepsilon$, telle que précédemment définie. Les résultats sont reportés sur le tableau 2 ci-dessous.

Tableau 2

| $\varepsilon$ | | IL1% | IL1.5% | IL2% | IL3% |
|---|---|---|---|---|---|
| $\varepsilon$ | | | | | |
| $\mu a$ | Figure 9B | 13.9% | 71.8% | 86% | 86% |
| | Figure 9D | 13.9% | 9.3% | 11.9% | 10.3% |
| $\mu's$ | Figure 9A | 1.9% | 3.5% | 6.8% | 8.3% |
| | Figure 9C | 1.9% | 2.5% | 2.1% | 2.6% |

La mise en œuvre d'un algorithme selon l'invention permet d'améliorer significativement la précision des estimations de propriétés optiques de l'échantillon.

Bien que les essais décrits aient été réalisés en mettant en œuvre une source de lumière blanche et un photodétecteur 40 spectrométrique, des configurations basées sur une source de lumière monochromatique, ou une pluralité de sources de lumière émettant dans des bandes spectrales différentes, et/ou la détection d'un signal de rétrodiffusion à l'aide d'un photodétecteur non spectrométrique sont envisageables.

En particulier, la source de lumière blanche peut être remplacée par différentes sources de lumière émettant dans des bandes spectrales différentes $\lambda_1$, $\lambda_2$...$\lambda_L$. Ainsi, le faisceau d'illumination 20 peut comporter, simultanément ou successivement, différentes bandes spectrales $\lambda_1$, $\lambda_2$...$\lambda_L$. Le dispositif peut également comporter une source de lumière, comprenant une pluralité de filtres optiques passe-bande, aptes à être successivement placés en regard de la source. De cette façon, le faisceau d'illumination 20 comporte successivement, différentes bandes spectrales $\lambda_1$, $A_2$...$\lambda_L$.

D'une façon générale, la source de lumière, quelle qu'elle soit, est apte à former, à la surface de l'échantillon, une zone élémentaire d'illumination telle que précédemment définie. Le recours à des fibres optiques pour former le faisceau d'illumination n'est pas nécessaire. Une source de lumière pourrait être une source Laser, ou une autre source de lumière, par exemple une diode électroluminescente. La source de lumière peut être couplée à un système optique de mise en forme, permettant la formation du faisceau lumineux 20 et sa projection sur la surface de l'échantillon afin de définir la zone d'élémentaire d'illumination 18.

De même, le photodétecteur peut être une photodiode, ou un photodétecteur matriciel de type CCD ou CMOS. Chaque pixel du photodétecteur est alors couplé à une zone élémentaire de détection soit par le système optique 30, soit en étant placé au contact de la surface de l'échantillon, ou éventuellement par l'intermédiaire de fibres optiques. L'utilisation d'un tel photodétecteur permet d'obtenir un grand nombre de distances de rétrodiffusion différentes. Elle est à privilégier dans les applications requérant une bonne résolution spatiale. Lorsque la source de lumière est apte à former un faisceau d'illumination 20, successivement, dans différentes bandes spectrales $\lambda_1$, $\lambda_2$...$\lambda_L$, un tel photodétecteur peut détecter mesurer un signal de rétrodiffusion $S_n(\lambda)$, successivement, dans chacune des bandes spectrales. De préférence, la propriété optique est alors déterminée dans chaque bande spectrale, indépendamment l'une de l'autre, en mettant en œuvre les étapes décrites ci-avant. Comme on peut le voir en lien avec les exemples décrits ci-avant, la largeur d'une bande spectrale peut être inférieure à 10 nm, de façon à avoir une estimation précise de l'évolution de la propriété optique considérée en fonction de la longueur d'onde.

Le nombre N de distances de rétrodiffusion peut également varier. D'une façon générale, ce nombre doit être supérieur ou égal au nombre de propriétés optiques à déterminer.

L'invention peut être mise en œuvre pour caractériser les propriétés optiques superficielles d'un échantillon. Appliquée à la peau, elle permet par exemple la détection précoce de pathologies, le contrôle de la vascularisation ou de la perfusion d'un principe actif. Elle peut être appliquée à toute application, de type contrôle non destructif, permettant d'estimer ou de suivre l'évolution d'une propriété optique à proximité de la surface d'un échantillon. Il peut par exemple s'agir d'applications dans le domaine de l'agroalimentaire, afin de contrôler la qualité ou la composition d'aliments.

**Revendications**

1. Procédé de détermination d'une propriété optique (p) d'un échantillon (50), comportant les étapes suivantes :

   i) illumination d'une surface de l'échantillon, à l'aide d'un faisceau lumineux (20) produit par une source de lumière (10), de façon à former, à la surface dudit échantillon, une zone élémentaire d'illumination (18), correspondant à la partie de ladite surface éclairée par ledit faisceau lumineux;

   ii) acquisition, à l'aide d'un photodétecteur (40), d'un signal de rétrodiffusion ($S_1(\lambda)$,...,$S_N(\lambda)$), à une longueur d'onde ($\lambda$), représentatif d'un rayonnement rétrodiffusé ($52_1$...$52_F$), à ladite longueur d'onde, par l'échantillon à une distance ($D_1$,..,$D_N$), dite distance de rétrodiffusion, de ladite zone élémentaire d'illumination ;

   iii) sélection d'un facteur de calibration $\left(f_n^1(\lambda)\right)$ correspondant à ladite distance de rétrodiffusion et à ladite longueur d'onde ($\lambda$);

   iv) application du facteur de calibration $\left(f_n^1(\lambda), f_n^i(\lambda)\right)$ au signal de rétrodiffusion ($S_1(\lambda)$,..., $S_N(\lambda)$), de façon à obtenir une grandeur d'intérêt ($R_1(\lambda)$,...,$R_N(\lambda)$), associée à ladite distance de rétrodiffusion ;

   v) détermination d'au moins une propriété optique de diffusion ou d'absorption *(p)* de l'échantillon, à ladite longueur d'onde, à l'aide de ladite grandeur d'intérêt ;

   le procédé étant **caractérisé en ce qu'**il comporte :

   vi) répétition des étapes iv) à v), en mettant à jour le facteur de calibration $\left(f_n^{i+1}(\lambda)\right)$, en fonction de ladite propriété optique *(p)* déterminée lors de l'étape v), le facteur de calibration étant remplacé par un facteur de calibration ($f_{n,p}(\lambda)$) sélectionné en fonction de ladite propriété optique *(p)*, les étapes iv) à v) étant répétées jusqu'à ce que l'écart entre les propriétés optiques ($p^i$, $p^{i+1}$) déterminées au cours de deux itérations successives (i, i+1) soit inférieur à un seuil prédéterminé ou jusqu'à un nombre d'itérations prédéterminé;

   et **en ce que** le facteur de calibration est mis à jour en utilisant une bibliothèque comportant des facteurs de calibration pour différentes propriétés optiques (p), au moins un facteur de calibration étant mesuré en effectuant un ratio entre :

   - une estimation d'une grandeur $\left(R_{calib-n}^{model}(\lambda)\right)$ représentative d'un rayonnement rétrodiffusé émanant d'une surface d'un échantillon de calibration, à ladite longueur d'onde, à la distance de rétrodiffusion ($D_n$) de la zone élémentaire d'illumination (18) dudit échantillon de calibration, lorsque l'échantillon de calibration est illuminé par ledit faisceau lumineux (20) ;

   - une mesure de ladite grandeur ($R_{calib-n}(\lambda)$), à l'aide d'un signal de rétrodiffusion ($S_{calib-n}(\lambda)$) détecté par ledit photodétecteur (40), à ladite longueur d'onde, l'échantillon de calibration étant illuminé par ledit faisceau lumineux (20) .

2. Procédé selon la revendication 1, dans lequel au moins un facteur de calibration sélectionné en fonction de la propriété optique (p) est déterminé par interpolation à partir de deux facteurs de calibration mesurés ($f_{n,p}(\lambda)$, $f_{n,p}(\lambda)$),

à ladite longueur d'onde, lesdits facteurs de calibration mesurés étant obtenus en utilisant respectivement deux échantillons de calibration dont les propriétés optiques *(p,p')* sont différentes.

3. Procédé selon l'une quelconque des revendications précédentes, dans lequel la propriété optique *(p)* considérée pour la mise à jour du facteur de calibration est une propriété optique de diffusion.

4. Procédé selon la revendication 3, dans lequel ladite propriété optique est choisie parmi :

   - un coefficient de diffusion ($\mu_s$),
   - un coefficient de diffusion réduit ($\mu_s'$).

5. Procédé selon l'une quelconque des revendications précédentes, dans lequel l'étape iv) comporte l'application d'un facteur de réactualisation $k_{n,t}(\lambda)$, déterminé en :

   ■ mesurant, à un instant *t,* un signal de rétrodiffusion ($S_{n,pcalib,t}(\lambda)$), représentant un rayonnement rétrodiffusé émanant de la surface d'un échantillon de calibration, à la distance de rétrodiffusion ($D_n$) de la zone élémentaire d'illumination dudit échantillon de calibration, l'échantillon de calibration étant illuminé par ledit faisceau lumineux (20) ;
   ■ comparant ledit signal de rétrodiffusion ($S_{n,pcalib,t}(\lambda)$) mesuré à l'instant t à un signal ($S_{n,pcalib,t0}(\lambda)$) mesuré, dans des mêmes conditions, à un instant antérieur $t_0$ audit instant *t,*

   de telle sorte que chaque facteur de calibration, correspondant à ladite distance de rétrodiffusion, est réactualisé par le facteur de réactualisation, le facteur de réactualisation étant déterminé à partir d'un seul échantillon de calibration.

6. Procédé selon l'une quelconque des revendications précédentes, dans lequel, lors de l'étape v) la détermination de la propriété optique (p) comporte une comparaison entre :

   - une grandeur d'intérêt ($R_1(\lambda),...,R_N(\lambda)$),
   - une pluralité d'estimations de ladite grandeur d'intérêt ($R_{1,p}^{model},..., R_{N,p}^{model}$) chaque estimation étant réalisée en considérant une valeur prédéterminée de ladite propriété optique (p).

7. Procédé selon l'une quelconque des revendications précédentes, dans lequel chaque signal de rétrodiffusion ($S_1(\lambda),..., S_N(\lambda)$) est acquis à une pluralité de longueurs d'ondes, de telle sorte que la grandeur d'intérêt ($P_1(\lambda),...,P_N(\lambda)$) et le facteur de calibration $(f_n^1(\lambda), f_n^i(\lambda))$ peuvent prendre la forme de fonctions spectrales, définies sur ladite pluralité de longueurs d'onde.

8. Procédé selon l'une quelconque des revendications précédentes, dans lequel ladite grandeur d'intérêt ($R_n(\lambda)$), associée à une distance de rétrodiffusion ($D_n$), est obtenue par l'application d'un ratio entre l'intensité d'un signal de rétrodiffusion ($S_n(\lambda)$), correspondant à ladite distance de rétrodiffusion ($D_n$), par l'intensité ($S_{source}$) dudit faisceau lumineux (20), mesurée par le photodétecteur (40), auquel cas ladite grandeur d'intérêt est une réflectance.

9. Procédé selon l'une quelconque des revendications précédentes, dans lequel, lors de l'étape v), on considère différentes valeurs de ladite grandeur d'intérêt, chaque valeur correspondant à une distance de rétrodiffusion différente.

10. Procédé selon l'une quelconque des revendications précédentes, dans lequel l'échantillon examiné est un tissu humain, animal, végétal, ou une denrée alimentaire.

11. Dispositif de mesure d'un signal optique produit par un échantillon comportant :

   - une source de lumière (10) apte à émettre un faisceau lumineux (20) vers une surface dudit échantillon (50), de façon à former, sur ladite surface, une zone élémentaire d'illumination (18),
   - un photodétecteur (40), apte à acquérir un signal de rétrodiffusion ($S_1(\lambda),..., S_N(\lambda)$), représentatif d'un rayonnement rétrodiffusé ($52_1...52_F$) par l'échantillon à une distance ($D_1,..,D_N$), dite distance de rétrodiffusion, de ladite zone élémentaire d'illumination ;

le dispositif étant **caractérisé en ce qu'**il comporte également :

- un processeur (48), apte à mettre en œuvre les étapes iii) à vi) du procédé objet de l'une des revendications 1 à 10.

**12.** Dispositif selon la revendication 11, comportant également un système optique (30), configuré pour assurer un couplage optique entre le photodétecteur (40) et une zone élémentaire de détection (28, 28n) située à la surface de l'échantillon, de laquelle émane ledit rayonnement rétrodiffusé ($52_1...52_F$).

**Patentansprüche**

1. Verfahren zur Bestimmung einer optischen Eigenschaft (p) einer Probe (50), umfassend die folgenden Schritte:

   i) Beleuchtung einer Oberfläche der Probe mithilfe eines Lichtstrahls (20), der von einer Lichtquelle (10) erzeugt wird, um auf der Oberfläche der Probe eine elementare Beleuchtungszone (18) zu bilden, die dem Teil der Oberfläche entspricht, die durch den Lichtstrahl beleuchtet wird;
   ii) Erfassung eines Rückstreusignals ($S_1(\lambda),...,S_N(\lambda)$) von der elementaren Beleuchtungszone mit einer Wellenlänge ($\lambda$), das für eine von der Probe rückgestreute Strahlung ($52_1...52_F$) mit der Wellenlänge repräsentativ ist, mithilfe eines Fotodetektors (40) in einem Abstand ($D_1,..., D_N$), Rückstreuabstand genannt;
   iii) Auswahl eines Kalibrierfaktors $\left(f_n^1(\lambda)\right),$ der dem Rückstreuabstand und der Wellenlänge ($\lambda$) entspricht;
   iv) Anwendung des Kalibrierfaktors $\left(f_n^1(\lambda), f_n^i(\lambda)\right)$ auf das Rückstreusignal ($S_1(\lambda),..., S_N(\lambda)$), um eine interessierende Größe ($R_1(\lambda),..., P_N(\lambda)$) zu erhalten, die mit dem Rückstreuabstand verbunden ist;
   v) Bestimmung mindestens einer optischen Streu- oder Absorptionseigenschaft (p) der Probe mit der Wellenlänge mithilfe der interessierenden Größe;

   wobei das Verfahren **dadurch gekennzeichnet ist, dass** es umfasst:

   vi) Wiederholung der Schritte iv) bis v) durch Aktualisieren des Kalibrierfaktors $\left(f_n^{i+1}(\lambda)\right)$ in Abhängigkeit von der optischen Eigenschaft (p), die in Schritt v) bestimmt wird, wobei der Kalibrierfaktor durch einen Kalibrierfaktor ($f_{n,p}(\lambda)$) ersetzt wird, der in Abhängigkeit von der optischen Eigenschaft (p) ausgewählt wird, wobei die Schritte iv) bis v) wiederholt werden, bis der Abstand zwischen den optischen Eigenschaften ($p^i$, $p^{i+1}$), die im Verlauf zweier aufeinanderfolgender Iterationen (i, i+1) bestimmt werden, kleiner als ein vorbestimmter Schwellenwert ist oder bis zu einer vorbestimmten Anzahl von Iterationen;
   und dadurch, dass der Kalibrierfaktor aktualisiert wird, indem eine Bibliothek verwendet wird, die Kalibrierfaktoren für verschiedene optische Eigenschaften (p) umfasst, wobei mindestens ein Kalibrierfaktor gemessen wird, indem ein Verhältnis gebildet wird zwischen:

   - einer Schätzung einer Größe $\left(R_{calib-n}^{model}(\lambda)\right),$ die für eine rückgestreute Strahlung repräsentativ ist, die von einer Oberfläche einer Kalibrierprobe mit der Wellenlänge ausgeht, im Rückstreuabstand ($D_n$) der elementaren Beleuchtungszone (18) der Kalibrierprobe, wenn die Kalibrierprobe durch den Lichtstrahl (20) beleuchtet wird;
   - einem Maß der Größe ($R_{calib-n}(\lambda)$ mithilfe eines Rückstreusignals ($S_{calib-n}(\lambda)$, das vom Fotodetektor (40) mit der Wellenlänge detektiert wird, wobei die Kalibrierprobe durch den Lichtstrahl (20) beleuchtet wird.

2. Verfahren nach Anspruch 1, wobei mindestens ein Kalibrierfaktor, der in Abhängigkeit von der optischen Eigenschaft (p) ausgewählt wird, durch Interpolation ausgehend von zwei gemessenen Kalibrierfaktoren ($f_{n,p}(\lambda), f_{n,p'}(\lambda)$) mit der Wellenlänge bestimmt wird, wobei die gemessenen Kalibrierfaktoren erhalten werden, indem jeweils zwei Kalibrierproben verwendet werden, deren optische Eigenschaften *(p, p')* unterschiedlich sind.

3. Verfahren nach einem der vorhergehenden Ansprüche, wobei die optische Eigenschaft (p), die für die Aktualisierung des Kalibrierfaktors berücksichtigt wird, eine optische Streueigenschaft ist.

4. Verfahren nach Anspruch 3, wobei die optische Eigenschaft ausgewählt wird aus:

   - einem Streukoeffizienten ($\mu_s$)

- einem reduzierten Streukoeffizienten ($\mu s'$).

5. Verfahren nach einem der vorhergehenden Ansprüche, wobei der Schritt iv) die Anwendung eines Reaktualisierungsfaktors $k_{n,t}(\lambda)$ umfasst, der bestimmt wird durch:

   ▪ Messen eines Rückstreusignals ($S_{n,pcalib,t}(\lambda)$), das eine rückgestreute Strahlung repräsentiert, die von der Oberfläche der Kalibrierprobe ausgeht, im Rückstreuabstand ($D_n$) der elementaren Beleuchtungszone der Kalibrierprobe, wobei die Kalibrierprobe durch den Lichtstrahl (20) beleuchtet wird;
   ▪ Vergleich des Rückstreusignals ($S_{n,pcalib,t}(\lambda)$), das zum Zeitpunkt $t$ gemessen wird, mit einem Signal ($S_{n,pcalib,t0}(\lambda)$), das unter denselben Bedingungen zu einem früheren Zeitpunkt $to$ als dem Zeitpunkt $t$ gemessen wurde,

   so dass jeder Kalibrierfaktor, der dem Rückstreuabstand entspricht, durch den Reaktualisierungsfaktor reaktualisiert wird, wobei der Reaktualisierungfaktor ausgehend von einer einzigen Kalibrierprobe bestimmt wird.

6. Verfahren nach einem der vorhergehenden Ansprüche, wobei in Schritt v) die Bestimmung der optischen Eigenschaft (p) einen Vergleich zwischen Folgendem umfasst:

   - einer interessierende Größe ($R_1(\lambda),...,P_N(\lambda)$),
   - einer Vielzahl von Schätzungen der interessierenden Größe ($R_{1,p}^{model},..., R_{N,p}^{model}$), wobei jede Schätzung unter Berücksichtigung eines vorbestimmten Werts der optischen Eigenschaft (p) durchgeführt wird.

7. Verfahren nach einem der vorhergehenden Ansprüche, wobei jedes Rückstreusignal ($S_1(\lambda),...,S_N(\lambda)$) mit einer Vielzahl von Wellenlängen erfasst wird, so dass die interessierende Größe ($R_1(\lambda),...,R_N(\lambda)$) und der Kalibrierfaktor

   $(f_n^1(\lambda), (f_n^i(\lambda))$ die Form von Spektralfunktionen annehmen können, die über die Vielzahl von Wellenlängen definiert sind.

8. Verfahren nach einem der vorhergehenden Ansprüche, wobei die interessierende Größe ($R_n(\lambda)$), die mit einem Rückstreuabstand ($D_n$) verbunden ist, durch Anwendung eines Verhältnisses zwischen der Stärke eines Rückstreusignals ($S_n(\lambda)$), die dem Rückstreuabstand ($D_n$) entspricht, und der Intensität ($S_{source}$) des Lichtstrahls (20), gemessen durch den Fotodetektor (40), erhalten wird, in welchem Fall die interessierende Größe ein Reflexionsvermögen ist.

9. Verfahren nach einem der vorhergehenden Ansprüche, wobei in Schritt v) verschiedene Werte der interessierenden Größe betrachtet werden, wobei jeder Wert einem anderen Rückstreuabstand entspricht.

10. Verfahren nach einem der vorhergehenden Ansprüche, wobei die untersuchte Probe ein menschliches, tierisches, pflanzliches Gewebe oder ein Lebensmittel ist.

11. Vorrichtung zur Messung eines von einer Probe erzeugten optischen Signals, umfassend:

   - eine Lichtquelle (10), die dazu fähig ist, einen Lichtstrahl (20) auf eine Oberfläche der Probe (50) zu emittieren, um auf der Oberfläche eine elementare Beleuchtungszone (18) zu bilden,
   - einen Fotodetektor (40), der dazu fähig ist, in einem Abstand ($D_1,..., D_N$), Rückstreuabstand genannt, ein Rückstreusignal ($S_1(\lambda),..., S_N(\lambda)$) zu erfassen, das für eine von der Probe rückgestreute Strahlung ($52_1...52_F$) repräsentativ ist;

   wobei die Vorrichtung **dadurch gekennzeichnet ist, dass** sie auch Folgendes umfasst:

   - einen Prozessor (48), der dazu fähig ist, die Schritte iii) bis vi) des Verfahrens als Gegenstand eines der Ansprüche 1 bis 10 umzusetzen.

12. Vorrichtung nach Anspruch 11, die auch ein optisches System (30) umfasst, das dazu konfiguriert ist, eine optische Kopplung zwischen dem Fotodetektor (40) und einer auf der Oberfläche der Probe befindlichen elementaren Detektionszone (28, 28n) herzustellen, von der die rückgestreute Strahlung ($52_1...52_F$) ausgeht.

**Claims**

1. Method for determining an optical property (p) of a sample (50), comprising the following steps:

   i) illumination of a surface of the sample, using a light beam (20) produced by a light source (10), so as to form, on the surface of said sample, an elementary illumination zone (18), corresponding to the part of said surface lit by said light beam;
   ii) acquisition, using a photodetector (40), of a backscattering signal $(S_1(\lambda),...,S_N(\lambda))$, at a wavelength $(\lambda)$, representative of a radiation backscattered $(52_1...52_F)$, at said wavelength, by the sample at a distance $(D_1,...,D_N)$, called backscattering distance, from said elementary illumination zone;

   iii) selection of a calibration factor $(f_n^1(\lambda))$ corresponding to said backscattering distance and to said wavelength $(\lambda)$;

   iv) application of the calibration factor $(f_n^1(\lambda), \tilde{f}_n^i(\lambda))$ to the backscattering signal $(S_1(\lambda),...,S_N(\lambda))$, so as to obtain a quantity of interest $(R_1(\lambda),...,R_N(\lambda))$, associated with said backscattering distance;
   v) determination of at least one optical scattering or absorption property (p) of the sample, at said wavelength, using said quantity of interest;

   the method being **characterized in that** it comprises:

   vi) repetition of the steps iv) to v), by updating the calibration factor $(f_n^{i+1}(\lambda))$, as a function of said optical property (p) determined in the step v), the calibration factor being replaced by a calibration factor $(f_{n,p}(\lambda))$ selected as a function of said optical property (p), the steps iv) to v) being repeated until the deviation between the optical properties $(p^i, p^{i+1})$ determined during two successive iterations (i, i+1) is below a predetermined threshold or up to a predetermined number of iterations;
   and **in that** the calibration factor is updated by using a library comprising calibration factors for different optical properties (p), at least one calibration factor being measured by obtaining a ratio between:

   - an estimation of a quantity $(R_{calib-n}^{model}(\lambda))$ representative of a backscattered radiation emanating from a surface of a calibration sample, at said wavelength, at the backscattering distance $(D_n)$ from the elementary illumination zone (18) of said calibration sample, when the calibration sample is illuminated by said light beam (20);
   - a measurement of said quantity $(R_{calib-n}(\lambda))$., using a backscattering signal $(S_{calib-n}(\lambda))$ detected by said photodetector (40), at said wavelength, the calibration sample being illuminated by said light beam (20).

2. Method according to Claim 1, wherein at least one calibration factor selected as a function of the optical property (p) is determined by interpolation from two measured calibration factors $(f_{n,p}(\lambda), f_{n,p'}(\lambda))$, at said wavelength, said measured calibration factors being obtained by using, respectively, two calibration samples with differing optical properties (p, p').

3. Method according to any one of the preceding claims, wherein the optical property (p) considered for the updating of the calibration factor is an optical scattering property.

4. Method according to Claim 3, wherein said optical property is chosen from among:

   - a scattering coefficient $(\mu_s)$,
   - a reduced scattering coefficient $(\mu_s')$.

5. Method according to any one of the preceding claims, wherein the step iv) comprises the application of an updating factor $k_{n,t}(\lambda)$, determined by:

   • measuring, at an instant $t$, a backscattering signal $(S_{n,pcalib,t}(\lambda))$, exhibiting a backscattered radiation emanating from the surface of a calibration sample, at the backscattering distance $(D_n)$ from the elementary illumination zone of said calibration sample, the calibration sample being illuminated by said light beam (20);
   • comparing said backscattering signal $(S_{n,pcalib,t}(\lambda))$ measured at the instant $t$ to a signal $(S_{n,pcalib,t0}(\lambda))$ measured, in the same conditions, at an instant to prior to said instant $t$,

such that each calibration factor, corresponding to said backscattering distance, is updated by the updating factor, the updating factor being determined from a single calibration sample.

6. Method according to any one of the preceding claims, wherein, in the step v), the determination of the optical property (p) comprises a comparison between:

- a quantity of interest $(R_1(\lambda),...,R_N(\lambda))$,
- a plurality of estimations of said quantity of interest $(R_{1,p}^{model}, ... , R_{N,p}^{model})$, each estimation being performed by considering a predetermined value of said optical property (p).

7. Method according to any one of the preceding claims, wherein each backscattering signal $(S_1(\lambda),...,S_N(\lambda))$ is acquired at a plurality of wavelenaths. such that the quantity of interest $(R_1(\lambda),...,R_N(\lambda))$ and the calibration factor $\{f_n^1(\lambda), f_n^i(\lambda)\}$ can take the form of spectral functions, defined on said plurality of wavelengths.

8. Method according to any one of the preceding claims, wherein said quantity of interest $(R_n(\lambda))$, associated with a backscattering distance $(D_n)$, is obtained by the application of a ratio between the intensity of a backscattering signal $(S_n(\lambda))$, corresponding to said backscattering distance $(D_n)$, by the intensity $(S_{source})$ of said light beam (20), measured by the photodetector (40), in which case said quantity of interest is a reflectance.

9. Method according to any one of the preceding claims, wherein, in the step v), different values of said quantity of interest are considered, each value corresponding to a different backscattering distance.

10. Method according to any one of the preceding claims, wherein the sample examined is a human, animal or vegetable tissue, or a food product.

11. Device for measuring an optical signal produced by a sample comprising:

- a light source (10) capable of emitting a light beam (20) towards a surface of said sample (50), so as to form, on said surface, an elementary illumination zone (18),
- a photodetector (40), capable of acquiring a backscattering signal $(S_1(\lambda),...,S_N(\lambda))$, representative of a radiation backscattered $(52_1...52_F)$ by the sample at a distance $(D_1,..,D_N)$, called backscattering distance, from said elementary illumination zone;

the device being **characterized in that** it also comprises:

- a processor (48), capable of implementing the steps iii) to vi) of the method that is the subject matter of one of the Claims 1 to 10.

12. Device according to Claim 11, also comprising an optical system (30), configured to ensure an optical coupling between the photodetector (40) and an elementary detection zone (28, 28n) situated on the surface of the sample, from which said backscattered radiation $(52_1...52_F)$ emanates.

**Fig.1**

**Fig.2**

**Fig.3A**

**Fig.3B**

$f_n^{i+1}(\lambda)$       $52_1,..,52_F$       $S_1(\lambda),..,S_N(\lambda)$     $f_n^1(\lambda)$

$R_1(\lambda),..,R_N(\lambda)$

$R_{1,p}^{model}, ... , R_{N,p}^{model}$

$f_n^{i+1}(\lambda) = f_{n,p}(\lambda)$     p     $f_{n,p}(\lambda)$

p

**Fig.4A**

**Fig. 4B**

**Fig.5**

**Fig. 6**

**Fig.7A**

**Fig.7B**

**Fig.7C**

**Fig.7D**

**Fig.8A**

**Fig.8B**

**Fig.8C**

**Fig.8D**

**Fig.9A**

**Fig.9B**

**Fig.9C**

**Fig.9D**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 2762064 A

**Littérature non-brevet citée dans la description**

- **QIN J.** Hyperspectral diffuse reflectance imaging for rapid, non contact measurement of the optical properties of turbid materials. *Applied Optics,* 10 Novembre 2006, vol. 45 (32